# EUROPÄISCHE PATENTANMELDUNG

(11) **EP 0 720 861 A1**
(43) Veröffentlichungstag der Anmeldung: **10.07.1996**
(21) Anmeldenummer: 95120515.2
(22) Anmeldetag: 23.12.1995
(51) Int. Cl.: B01D 17/02, E03F 5/16

(54) **Abscheideanlage für mit Schwimm- und Sinkstoffen befrachtete Abwässer**

(30) Priorität: 04.01.1995 DE 19500130
(71) Anmelder: PASSAVANT-WERKE AG, D-65322 Aarbergen 7 (DE)
(72) Erfinder: Baar, Norbert, D-65329 Hohenstein-Holzhausen (DE); Dambmann, Willi, D-66558 Gückingen (DE); Middelhaufe, Axel, D-65582 Diez (DE); Hickl, Herbert, D-65326 Aarbergen (DE)

(57) **Zusammenfassung**

Die neue Abscheideranlage für mit Schwimm- und Sinkstoffen befrachtete Abwässer zeichnet sich erfindungsgemäß dadurch aus, daß der Absetzraum für die Sinkstoffe, in den das Abwasser eingeleitet wird, vollständig unter dem Abscheideraum für die Schwimmstoffe liegt und ohne Querschnittsverengung in diesen übergeht. Der Zulauf mündet vorzugsweise tangential im oberen Drittel des Absetzraums. Wenn der den Klarwasserauslauf umgebende Koaleszenzeinsatz eine Rückspüleinrichtung erhält, dann sinkt der beim Rückspülen anfallende Schlamm direkt in den Sinkstoff-Absetzraum und kann dort mitentsorgt werden.

## Beschreibung

Die Erfindung bezieht sich auf eine Abscheideanlage für mit Schwimm-, wie Öl und Benzin u.dgl., und Sinkstoffen befrachtete Abwässer. Derartige Abwässer kommen in vielen Bereichen der Wirtschaft, der Industrie und des Gewerbes vor.

Es ist Vorschrift, daß diese Abwässer vor ihrer Einleitung in die Kanalisation oder den Vorfluter in einem nach dem Dichtedifferenzprinzip arbeitenden Abscheider behandelt werden müssen. Üblicherweise geschieht dies in einem der Prüfzeichenpflicht unterworfenen Schwimmstoffabscheider und einem diesem vorgeschalteten Schlammfang, wobei die beiden Kammern auch in einem gemeinsamen Becken vereinigt sein können (DE 27 10 256 C1). Für wegen ihres hohen Dispersionsgrades schwierig abzuscheidende Schwimmstoffe werden Koaleszenzeinsätze benutzt, die vorzugsweise flächenhafte Form haben und vor der Klarwasser-Auslauföffnung angeordnet sind (DE 37 04 911 C1).

Die übliche Hintereinanderanordnung von zwei Becken hat den Nachteil des hohen Platzbedarfs. Die Überleitung des Abwassers aus dem Schlammfang in den Schwimmstoffabscheider bedeutet eine Strömungsbeschleunigung und erneute Verwirbelung der Trennstoffe, die die Abtrennung im Schwimmstoffabscheider erschweren. Außerdem ist die Entsorgung des Schwimmstoffabscheiders problematisch, weil sich auch in ihm Sinkstoffe sammeln können, die wegen ihrer kleinen Dichtedifferenz zu Wasser im Schlammfang nicht abgetrennt wurden. Wenn ein Koaleszenzeinsatz vorgesehen ist, muß dieser in regelmäßigen Zeitabständen rückgespült werden. Geschieht die Rückspülung im Abscheider, dann muß der Rückspülschlamm ebenfalls aufwendig entsorgt werden.

Die Aufgabe, die geschilderten Nachteile zu beseitigen, wird erfindungsgemäß durch die in Patentanspruch 1 aufgeführten Merkmale gelöst. Danach ergibt sich eine außerordentlich kompakte platzsparende Abscheideanlage, deren ohne Querschnittsverengung ineinander übergehenden Abscheideräume gleichzeitig durchströmt werden. Der Zulauf liegt vorzugsweise etwa im oberen Drittel des unteren Sinkstoff-Abscheideraumes. Wenn die Mündung des Zulaufs in bevorzugter Ausgestaltung der Erfindung tangential ausgerichtet ist, dann stellt sich im Betrieb eine spiralige und leicht aufwärts verlaufende Strömung mit einem besonders langen Abscheideweg ein, der das Absinken bzw. Aufsteigen der Trennstoffe in die strömungslosen Zonen begünstigt. Die Strömung ist in allen Abschnitten laminar und wirbelfrei. Der in diesem Fall zentral angeordnete und vorzugsweise als Hohlzylinder ausgebildete Koaleszenzeinsatz wird von dieser Strömung über seinen ganzen Umfang gleichmäßig beaufschlagt.

Ein weiterer Vorteil dieser neuen Ausgestaltung wird bei der Entsorgung der Trennstoffe spürbar. Die Trennstoffe werden nacheinander aus ein- und demselben Abscheidebecken entnommen. Es ist sehr vorteilhaft, für die Entsorgung der Trennstoffe fest installierte Abzugsleitungen einzusetzen. Die Leitung für die Sinkstoffe ist vorzugsweise von der engsten Abzugsstelle des als Trichter ausgebildeten Bodens des unteren Abscheideraums nach oben weggeführt. Die fest installierte Abzugsleitung für die Schwimmstoffe beginnt im unteren Bereich der maximal zulässigen Schichtdicke der Schwimmstoffe. Die spiralige Strömungsform kann in weiterer Ausgestaltung der Erfindung durch eine in der Nähe der Zulaufmündung beginnende und bis etwa zum zentralen Koaleszenzeinsatz geführte, ebenfalls spiralige Leitwand unterstützt werden.

Auch der bei der Totalentleerung notwendige Spülvorgang ist durch die neue Gestaltung dadurch vereinfacht, daß jetzt nur noch ein Becken gespült werden muß und die dabei anfallende Spülschlammenge kleiner ist. Schließlich ist auch die nach dem Spülen vorgeschriebene Wiederbefüllung mit verschmutzungsfreiem Wasser ohne Umsetzen der Befülleitung durchführbar.

Für den Fall, daß in kurzer Zeit große Mengen an Schwimmstoffen anfallen, bietet sich der Sinkstoff-Abscheideraum als zusätzlicher Speicherraum für die Schwimmstoffe an. Hierfür muß allerdings der Klarwasserauslauf so tief gesetzt werden, daß er bei Eintritt dieses Notfalls von der Leichtflüssigkeitsschicht nicht erreicht wird.

Es ist bekannt, daß mit den im Koaleszenzeinsatz zu aufschwimmfähigen Partikeln aggregierten Schwimmstoffen auch Sinkstoffe in kleinster Verteilung herangeführt werden, die an die Schwimmstoffpartikel angelagert sind. Diese Aggregate setzen sich teilweise ohne Trennung im Koaleszenzeinsatz fest und verstopfen diesen zunehmend. Die Aufgabe, die Verstopfung rückgängig zu machen, wird erfindungsgemäß durch eine an sich bekannte Rückspüleinrichtung gelöst, die auf der Abströmseite des Koaleszenzeinsatzes installiert ist. Beim Rückspülvorgang werden die aus Sinkstoffen und Leichtstoffen bestehenden Ablagerungen voneinander getrennt. Die auf der Anströmseite des Koaleszenzeinsatzes anfallenden Trennstoffe können sich jetzt in die beiden Trennrichtungen bewegen. Die Sinkstoffe gelangen ohne Zwischenförderung oder Umlenkung auf den Boden des Beckens und können von dort zusammen mit den vorher angesammelten Sinkstoffen abgesaugt werden.

Die Abbildungen zeigen bevorzugte Ausführungsformen der Erfindung im axialen Vertikalschnitt des als Rundbauwerk ausgeformten Abscheidebeckens. Es zeigen:
- Fig. 1: eine erste Ausführungsform mit zentrisch angeordnetem Koaleszenzeinsatz,
- Fig. 2: eine zweite Ausführungsform mit fest installierten Abzugsleitungen für die abgeschiedenen Trennstoffe,
- Fig. 3: eine dritte Ausführungsmöglichkeit mit an die Beckenwand angeschlossenem bogenförmigen Koaleszenzeinsatz.

Das vorzugsweise in Stahlbeton hergestellte Becken 1 ist oben durch eine dicht angeschlossene Platte 2 abgedeckt. Die Platte enthält eine Wartungsöffnung 3 und einen darauf versetzten Kontrollschacht 4 mit Schachtabdeckung 5.

Das seitlich über dem Flüssigkeitsspiegel 7 eingeführte Zulauftauchrohr 8 mündet im unteren Drittel des Abscheidebeckens und besitzt eine vorzugsweise tangential ausgerichtete Mündung 9. Das Volumen des Beckens wird durch eine gedachte Horizontallinie 12 in einen unteren Sinkstoff-Abscheideraum 10 und einen oberen Schwimmstoff-Abscheideraum 11 unterteilt. Über dieser Trennlinie liegt zentral der nach unten gerichtete Klarwasser-Auslauf 13, dem ein hohlzylindrischer Koaleszenzeinsatz 14 und ein Schwimmerverschluß 15 vorgeordnet sind. An der Innenfläche des Koaleszenzeinsatzes 14 liegt eine aus Strahldüsen bestehende Rückspüleinrichtung 16, die über einen Schlauch 17 mit Spülwasser versorgt wird. Das von der Auslauföffnung 13 weggeführte Auslaufrohr 18 ist wie üblich mit drei 90°-Rohrwinkeln aus dem Becken heraus- und außen hochgeführt, wo die Überlaufschwelle 19 für den im Becken einzuhaltenden Flüssigkeitsstand sorgt. Das Auslaufrohr 18' kann auch bereits in Höhe der Trennlinie 12 nach außen geführt werden. Der aufsteigende Ast kann auch innerhalb des Beckens verlaufen. An der Überlaufschwelle kann durch eine Rohrerweiterung eine von oben durch eine Revisionsöffnung zugängliche Probenahmestelle eingerichtet sein.

Das durch das Zulaufrohr 8 in das Abscheidebecken einlaufende Abwasser nimmt den durch Pfeile 20,21 angedeuteten spiraligen Weg und beaufschlagt zum Schluß den zentral positionierten Koaleszenzeinsatz 14. Im Dauerbetrieb sammeln sich als Schwimmschicht 22 die aufgeschwommenen Leichtstoffe und als Sediment 23 die Sinkstoffe. Der Schwimmer 15 des Ablaufverschlusses sinkt mit zunehmender Schichtdicke nach unten, so daß der Klarwasserauslauf 13 bei Erreichen der maximal zulässigen Speichermenge verschlossen wird. Zum Abzug der Trennstoffe wird der Schachtdeckel geöffnet und der Inhalt mit einem Saugrüssel abgesaugt. Nach der vollständigen Entleerung muß das Abscheidebecken mit verschmutzungsfreiem Wasser bis zum Überlauf gefüllt werden.

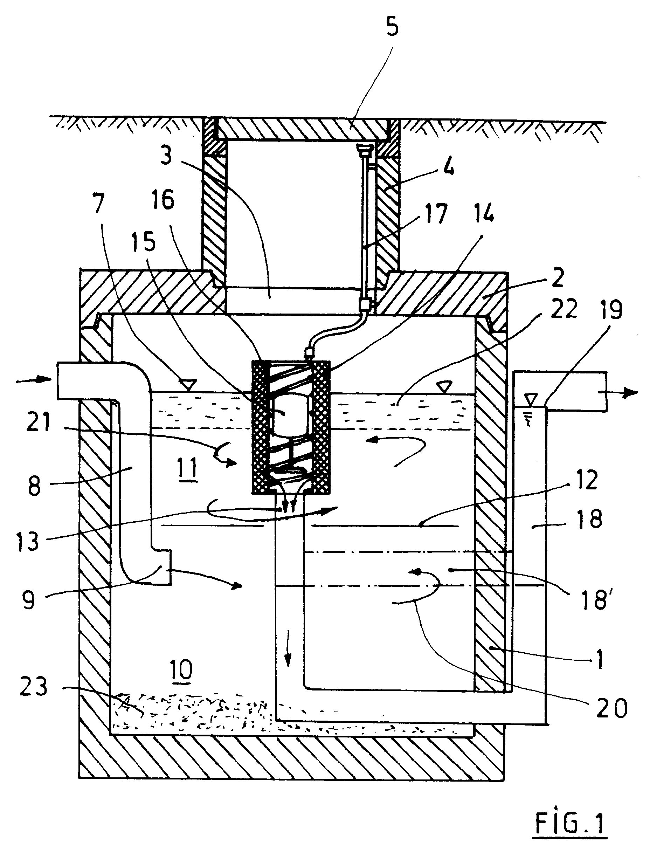

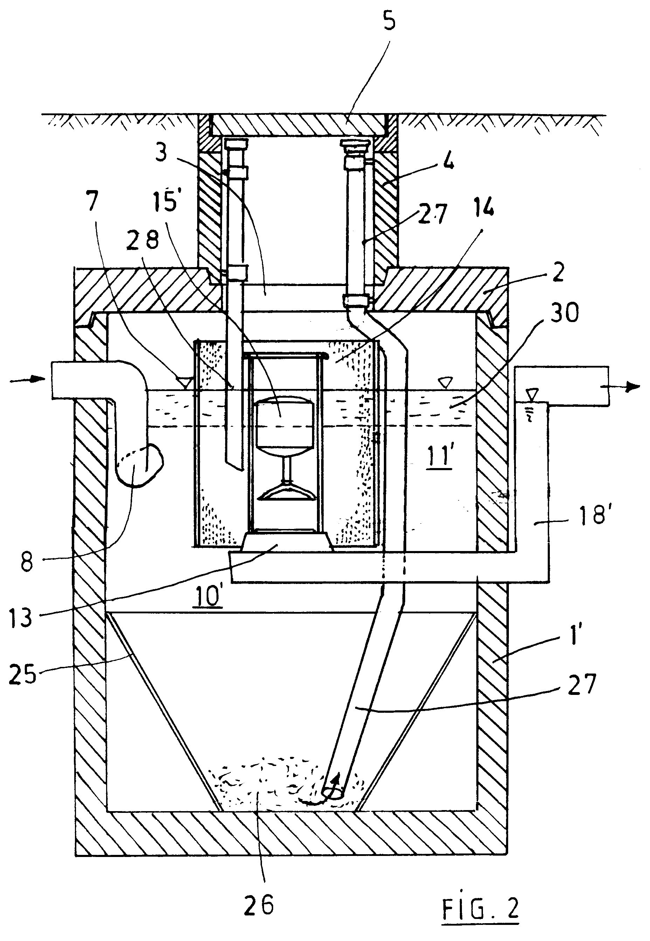

Die Ausführungsform nach Fig. 2 unterscheidet sich von der nach Fig. 1 dadurch, daß der Boden des Abscheideraums 10' mit einem Konus 25 ausgesattet ist, an dessen unterer engster Stelle 26 eine durch den Wartungsschacht 4 nach oben weggeführte, fest installierte Abzugsleitung 27 beginnt. Auch der obere Abscheideraum 11' besitzt eine fest installierte Abzugsleitung 28 für die dort angesammelten Schwimmstoffe 30. Die Abzugsleitung 28 beginnt etwa dort, wo die Untergrenze der Schwimmschicht bei maximal zulässiger Speichermenge liegt.

Der Koaleszenzeinsatz 14' hat hier die Form eines großen Hohlzylinders, so daß die Abzugsleitung noch innerhalb des Einsatzes beginnen kann. Auch dieser Einsatz kann eine (nicht dargestellte) Rückspüleinrichtung für den abgelagerten Ölschlamm bekommen. Der Ölschlamm wird beim Rückspülen in Sink- und Schwimmstoffe zerlegt, so daß sich diese Stoffe zu den beiden Abzugsstellen bewegen und bei der nächsten Entsorgung mit abgesaugt werden können.

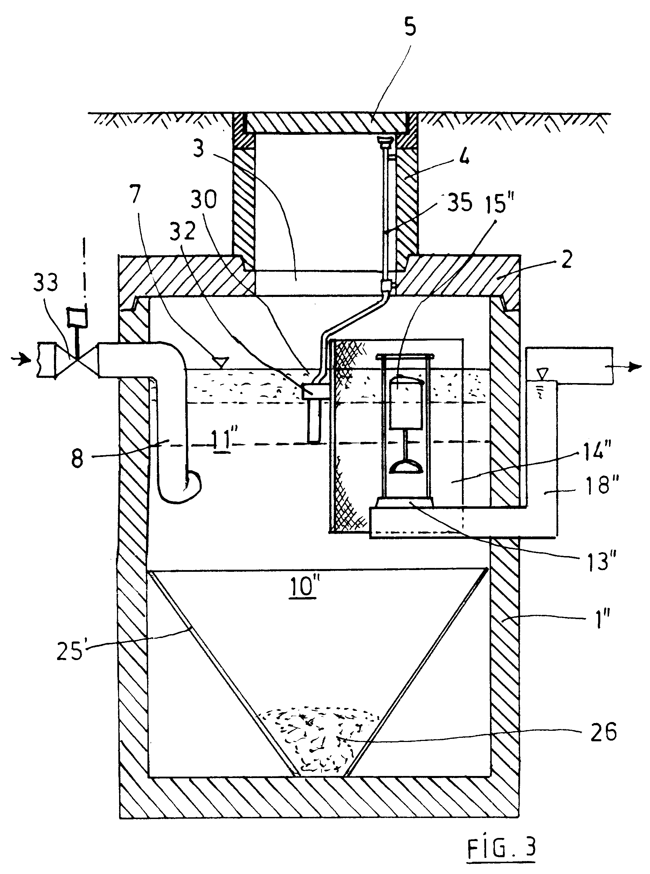

Beim dritten Ausführungsbeispiel nach Fig. 3 ist der Klarwasserauslauf 13'' außermittig angeordnet. Der dem Auslauf vorgeordnete Koaleszenzeinsatz 14'' hat hier eine halbkreisförmig gebogene Gestalt. Seine Endkanten sind an die Beckenwand angeschlossen. Außerhalb des Koaleszenzeinsatzes 14'' ist eine Fühlsonde 32 angehängt, und zwar in einer solchen Höhe, daß sie bei Erreichen der höchstzulässigen Schwimmstoffmenge ein Signal zum Absperren des in der Zulaufleitung 8 liegenden Ventils 33 liefert. Das danach zulaufende Abwasser wird zurückgehalten und kann nicht zu einem Ansteigen des Spiegels im Abscheidebecken mit den nachteiligen Folgen führen. Bei diesem Zustand hat auch der Schwimmerverschluß 15'' bereits den Klarwasserauslauf 13'' verschlossen.

Bei den in den Figuren 2 und 3 gezeigten Abscheidebecken kann der Konusboden aus Kunststoff bestehen und mit einer preiswerten Formmasse hinterfüllt sein. In den Fällen der Figuren 1 und 2 kann um den Koaleszenzeinsatz eine spiralig verlaufende Leitwand aufgestellt werden, die jegliche Kurzschlußströmung zum Ablauf hin unterbindet.

## Patentansprüche

1. Abscheideanlage für mit Schwimm- und Sinkstoffen befrachtete Abwässer, bestehend aus einem beruhigt durchströmten Abscheidebecken (1, 1', 1''), das einen seitlichen Zulauf (8), einen Absetzraum (10, 10', 10'') für die Sinkstoffe, einen Abscheideraum (11, 11', 11'') für die Schwimmstoffe, einen aus dem Abscheideraum für die Schwimmstoffe unten herausgeführten Klarwasserauslauf (13, 13', 13'') und im Abscheideraum einen dem Klarwasserauslauf vorgeordneten, vom Abwasser durchströmten flächenhaften Koaleszenzeinsatz (14, 14', 14'') aufweist, **dadurch gekennzeichnet,** daß der Absetzraum (10, 10', 10'') für die Sinkstoffe vollständig unter dem Abscheideraum (11, 11', 11'') für die Schwimmstoffe liegt und im wesentlichen ohne Querschnittsverengung in diesen übergeht.

2. Abscheideanlage nach Anspruch 1, **dadurch gekennzeichnet,** daß der Koaleszenzeinsatz (14) eine in Gegenrichtung zur Anströmung wirksame Rückspüleinrichtung (16) aufweist.

3. Abscheideanlage nach Anspruch 1 oder 2, **dadurch gekennzeichnet,** daß der Zulauf (8) etwa im oberen Drittel der Höhe des Absetzraums (10) tangential mündet.

4. Abscheidesanlage nach Anspruch 1 oder 2, **dadurch gekennzeichnet,** daß die Mündung des Zulaufs (8) etwa in halber Höhe des Koaleszenzeinsatzes (14', 14'') liegt.

5. Abscheideanlage nach Anspruch 1 bis 4, **dadurch gekennzeichnet,** daß der Klarwasserauslauf (13'') und der ihm vorgeordnete Koaleszenzeinsatz (14'') außermittig angeordnet sind und dem Zulauf (8) gegenüberliegen.

6. Abscheideanlage nach einem oder mehreren der Ansprüche 1 bis 5, **dadurch gekennzeichnet,** daß die Mündung des Zulaufs (8) tangential zur Wand ausgerichtet ist.

7. Abscheideanlage nach Anspruch 5, **dadurch gekennzeichnet,** daß der Koaleszenzeinsatz (14'') um eine Vertikalachse gebogen ausgebildet und mit seinen beiden Vertikalkanten an die Wand des Abscheideraums (11'') angeschlossen ist.

8. Abscheideanlage nach Anspruch 7 mit im wesentlichen zentrisch in dem als Rundbecken ausgebildeten Abscheideraum angeordneten Klarwasserauslauf und im wesentlichen hohlzylindrisch ausgebildeten Koaleszenzeinsatz, **gekennzeichnet** durch eine an der Zulaufmündung beginnende, spiralig verlaufende Leitfläche, die mit Abstand vom Koaleszenzeinsatz endet.

9. Abscheider nach einem oder mehreren der Ansprüche 1 bis 8, **dadurch gekennzeichnet,** daß der Absetzraum (10', 10'') einen zu einer unteren Abzugsstelle führenden konischen Boden (25, 25') aufweist und daß von der Abzugsstelle eine fest installierte Abzugsleitung (27) für die Sinkstoffe nach oben weggeführt ist.

10. Abscheideanlage nach einem oder mehreren der Ansprüche 1 bis 9, **dadurch gekennzeichnet,** daß eine Abzugsleitung (28) für die aufgeschwommenen Leichtstoffe fest installiert ist, deren Ansaugöffnung innerhalb des Koaleszenzeinsatzes (14') etwas über der Untergrenze der maximal zulässigen Schwimmschicht (30) der Leichtstoffe liegt.

11. Abscheideanlage nach einem oder mehreren der Ansprüche 1 bis 10, **gekennzeichnet** durch eine an der Untergrenze der maximal zulässigen Schwimmstoffschicht (30) angeordnete Fühleinrichtung (32), die auf eine in der Zulaufleitung (8) vorgesehene Verschlußeinrichtung (33) im Schließsinn geschaltet ist.
